# EUROPEAN PATENT APPLICATION

(11) **EP 1 906 033 A1**
(43) Date of publication of application: **02.04.2008**
(21) Application number: 06020633.1
(22) Date of filing: 29.09.2006
(51) Int. Cl.: F16B 39/282, F16B 39/24

(54) **Bolt and nut combination**

(71) Applicant: Chen, Ying-Li, Kaohsiung (TW)
(72) Inventor: Chen, Ying-Li, Kaohsiung (TW)
(74) Representative: Hauck Patent- und Rechtsanwälte

(57) **Abstract**

A bolt and nut combination has a nut assembly and a bolt assembly. The nut assembly has a nut (10) and a washer (20). The nut (10) has a threaded hole (101) and wedging surfaces (12). The washer (20) is connected with the nut (10) and has a through hole (22), inclined surfaces (23) and engaging surfaces (24). The inclined surfaces (23) are formed on the washer (20) and contacted with the wedging surfaces (12). The engaging surfaces (24) are formed on the washer (20) opposite to the inclined surfaces (23). The bolt assembly is engaged with the nut assembly and has a washer (20) and a bolt (30). The bolt (30) is screwed with the nut (10) and has a shank (31), a thread (32), a head (33) and wedging surfaces (35). The wedging surfaces (35) are formed below the head (33) and contacted with the inclined surfaces (23).

## Description

### 1. Field of the Invention

The present invention relates to a bolt and nut combination, and more particularly to a bolt and nut combination that having washers squeezed between the bolt and the nut to avoid the bolt from loosening from the nut and to engage with an object securely with the washers.

### 2. Description of Related Art

A conventional bolt and nut combination includes a bolt and two nuts screwed onto the bolt to securely combine two objects together and may has a washer mounted between the bolt and one of the nuts. When the bolt and nut combination is in use, an impacting force applied to the objects will gradually loosen the bolt and nut combination because that the bolt or the nuts will involuntarily rotate.

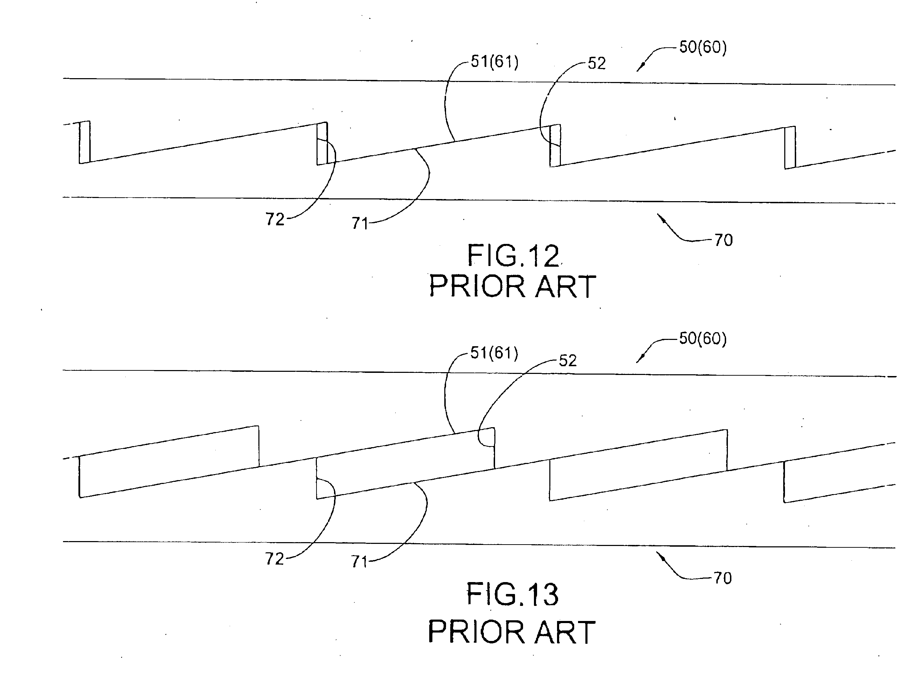

In order to overcome the shortcoming, with reference to Figs. 12 and 13, two locking washers (70) are mounted between a bolt (60) and a nut (50) to prevent the nut (50) from loosening from the bolt (60). The blot (60) and the nut (50) respectively have multiple wedging teeth on a bottom of the bolt (60) and the nut (50) and each teeth has a wedging surface (61,51) and a retaining surface (62,52) formed vertically between the wedging surfaces (61, 51) of adjacent teeth.

The locking washers (70) each has a top, a bottom, multiple inclined surfaces (71), multiple blocking surfaces (72) and multiple engaging surfaces. The inclined surfaces (71) are formed continuously on the top of the locking washer (70) to contact with the wedging surface (61,51) of teeth on the bolt (60) or the nut (50). The blocking surfaces (72) are formed vertically on the adjacent inclined surfaces (71) to respectively contact with the retaining surfaces (62, 52) of teeth on the bolt (60) or the nut (50). The engaging surfaces are formed continuously on the bottom of the locking washer (70) to contact with an object.

In use, the conventional bolt and nut combination combined with objects by the bolt (60) and the nut (50) respectively rotating relative to the corresponding locking washers (70) to engage with the objects.

A height of the blocking surface (72) in the locking washers (70) is larger than a thread pitch of the bolt (60) and the nut (50). When an external force is applied to and loosens the conventional bolt and nut combination, the locking washers (70) will be pushed toward the objects by the bolt (60) and the nut (50) due to the engagement between the wedging surface (61, 51) and the inclined surface (71). Consequently, a returning force is generated from the object and applied to the washers (70) to rotate the bolt (60) or the nut (50) return to an original place and engage with the washers (70) firmly.

However, the inclined surfaces (71) are parallelly contacted with the wedging surfaces (61, 51) on the bolt (60) and the nut (50), and a large contacting area between the inclined surface (71) and a corresponding wedging surface (61,51) will decrease the pressure between the bolt (60), the nut (50) and the locking washers (70). Then, the returning force applied to the conventional bolt and nut combination is not enough for completely rotating the bolt (60) and the nut (50) to the original position and to engage with the locking washers (70). The conventional bolt and nut combination will be still unintentionally loosened after a long time of use.

To overcome the shortcomings, the present invention tends to provide a bolt and nut combination to mitigate the aforementioned problems.

The main objective of the present invention is to provide a bolt and nut combination that has washers squeezed between a bolt and a nut to avoid the engagement of the bolt and nut from loosening and to keep the washers engaging with objects securely.

The bolt and nut combination has a nut assembly and a bolt assembly. The nut assembly has a nut and a washer. The nut has a threaded hole and wedging surfaces. The washer is connected with the nut and has a through hole, inclined surfaces and engaging surfaces. The inclined surfaces are formed continuously on the washer and contact with the wedging surfaces of the nut. The engaging surfaces are formed on the washer opposite to the inclined surfaces. The bolt assembly is engaged with the nut assembly and has a washer and a bolt. The bolt is screwed with the nut and has a shank, a thread, a head and wedging surfaces. The wedging surfaces are formed below the head and contact respectively with the inclined surfaces in the washer.

Other objects, advantages and novel features of the invention will become more apparent from the following detailed description when taken in conjunction with the accompanying drawings.

### IN THE DRAWINGS:

Fig. 1 is an exploded perspective view of a first embodiment of a nut assembly of a bolt and nut combination in accordance with the present invention;
Fig. 2 is an exploded perspective view of a second embodiment of a nut assembly of a bolt and nut combination in accordance with the present invention;
Fig. 3 is an exploded perspective view of the second embodiment of the nut assembly in Fig. 2;
Fig. 4 is a perspective bottom view of a first embodiment of a bolt assembly of a bolt and nut combination in accordance with the present invention;
Fig. 5 is an exploded perspective view of a second embodiment of a bolt assembly of a bolt and nut combination in accordance with the present invention:
Fig. 6 is an exploded perspective view of the second embodiment of the bolt assembly in Fig. 5;
Fig. 7 is a side view in partial section of the second embodiment of the bolt and the nut assemblies of the bolt and nut combination in accordance with the present invention combining with two objects;
Fig. 8 is a perspective view of a second embodiment of the washer in accordance with the present invention;
Fig. 9 is a side view of the second embodiment of the washer in Fig. 8 engaging with a nut or a bolt;
Fig. 10 is an operational side view of the second embodiment of the washer in Fig. 1 engaging with the nut or the bolt in Fig. 9;
Fig. 11 is a perspective view of a third embodiment of a washer of a bolt and nut combination in accordance with the present invention;
Fig. 12 is a side view of a conventional washer engaging with a conventional bolt or a conventional nut in accordance with the prior art; and
Fig. 13 is an operational side view of the conventional washer engaging with the conventional bolt or the nut in Fig. 12.

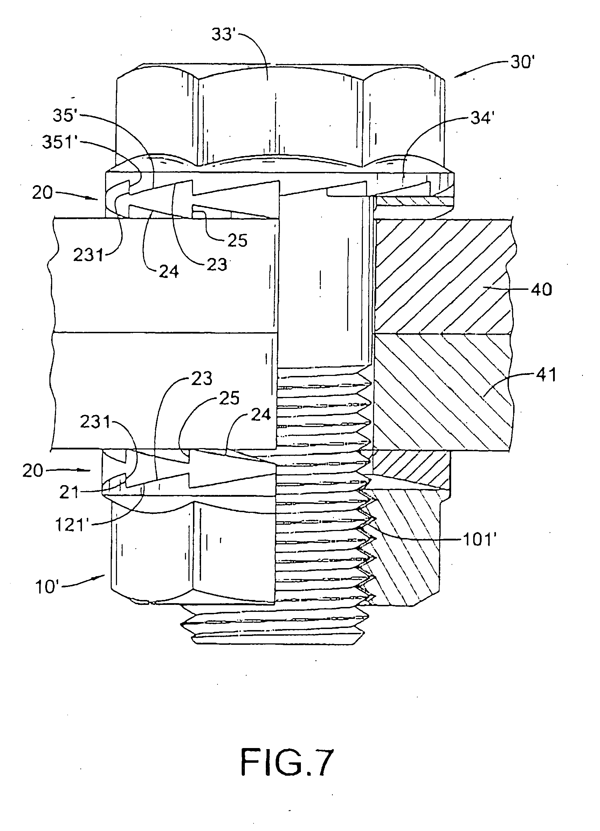

With reference to Fig. 7, a blot and nut combination in accordance with the present invention comprises a nut assembly and a blot assembly. With reference to Fig. I, a first embodiment of the nut assembly of the bolt and nut combination in accordance with the present invention includes a nut (10) and a washer (20).

The nut (10) has a center, a bottom, a threaded hole (101) and multiple wedging surfaces (12). The threaded hole (101) is formed through the center of the nut (10). The wedging surfaces (12) are formed continuously on the bottom of the nut (10) and each wedging surface (12) has two connecting portions and a retaining surface (121). The retaining surface (121) is formed vertically on one of the connecting portions of the wedging surface (12) and is connected to an adjacent wedging surface (12).

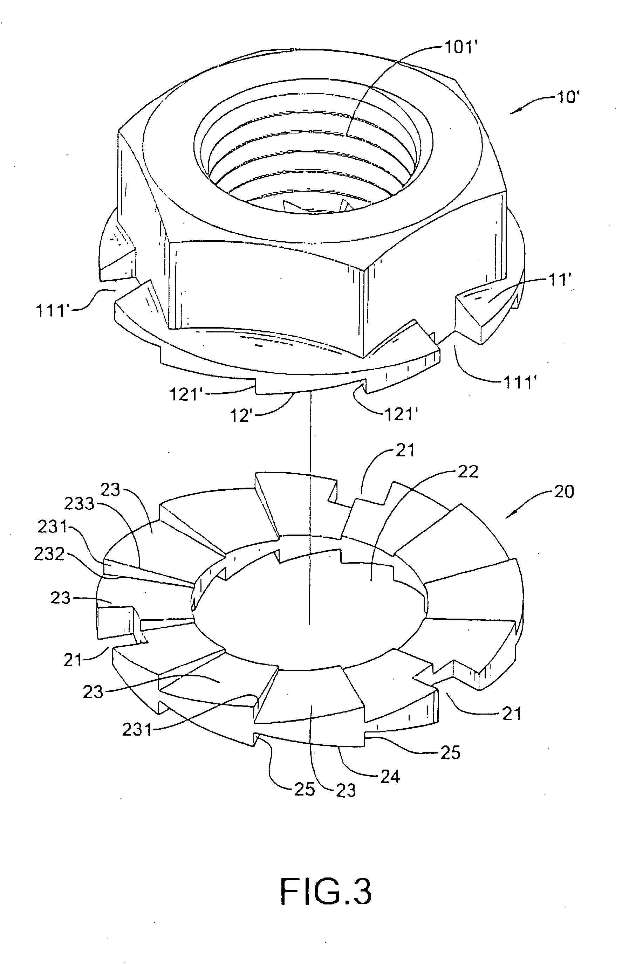

With further reference to Fig. 3, the washer (20) abuts and is engaged with the nut (10) and has a center, a top, a bottom, a through hole (22), multiple inclined surfaces (23), multiple engaging surfaces (24) and optional multiple notches (21). The through hole (22) is defined in the center of the washer (20) and communicates with the threaded hole (101) of the nut (10). The inclined surfaces (23) are formed continuously on the top of the washer (20) and are contacted to and engaged with the wedging surfaces (12) of the nut (10). Each inclined surface (23) has a rear end, a bottom edge (232), a bearing surface (231) and an inclined edge (233).

The bottom edge (232) is defined in the rear end of the inclined surface (23). The bearing surface (231) is vertically formed up from the inclined surface (23), is contacted with a corresponding retaining surface (121) of the wedging surface (12) and has a lower end and an upper end. When the nut (10) is rotated, the retaining surfaces (121) of the wedging surfaces (12) will push against the bearing surfaces (231) of the inclined surfaces (23) and the washer (20) will be rotated with the nut (10). The lower end of the bearing surface (231) is contacted to a corresponding bottom edge (232). The inclined edge (233) is defined in the upper end of the bearing surface (231).

The engaging surfaces (24) are formed continuously on the bottom of the washer (20) and each engaging surface (24) has two connecting portions and a blocking surface (25). The blocking surface (25) is formed vertically on one of the connecting portions of the engaging surface (24), is connected to an adjacent engaging surface (24) and abuts and contacts with an object as shown in Fig. 7. The notches (21) are formed through the washer (20) from the bottom to the top.

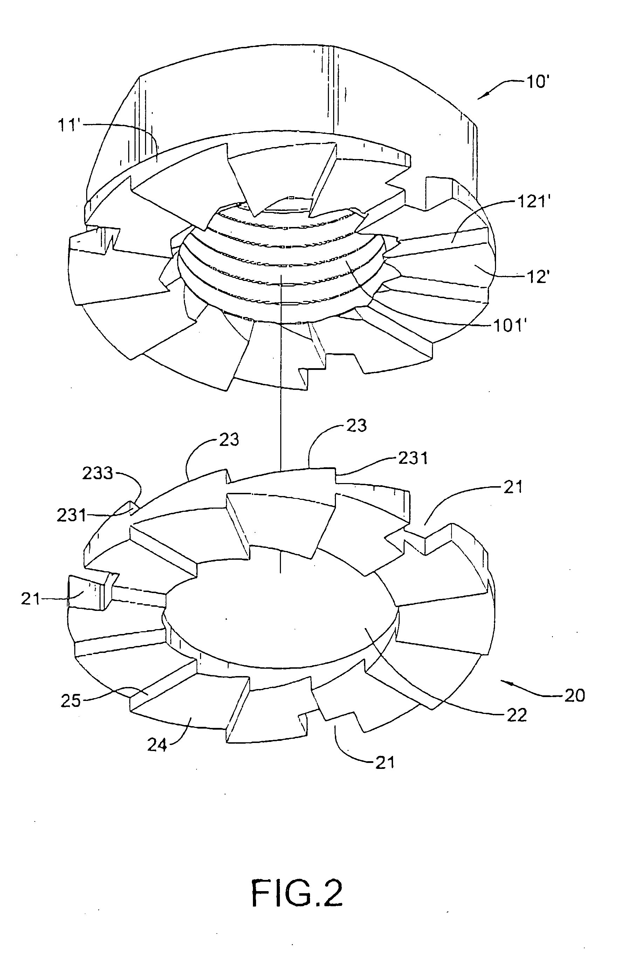

With further reference to Figs. 2 and 3, a second embodiment of a nut (10') has a structure substantially same as the nut (10) in the first embodiment but further has a flange (11'). The flange (11') is formed around the bottom of the nut (10'), is connected to the wedging surfaces (12') and has multiple gaps (111'). The gaps (111') are formed through the flange (11') and the wedging surfaces (12'), are correspond to and communicated with the notches (21) in the washer (20). Accordingly, a tool with multiple paws for engaging with the gaps (111') and the notches (21) can be used to rotate the nut assembly.

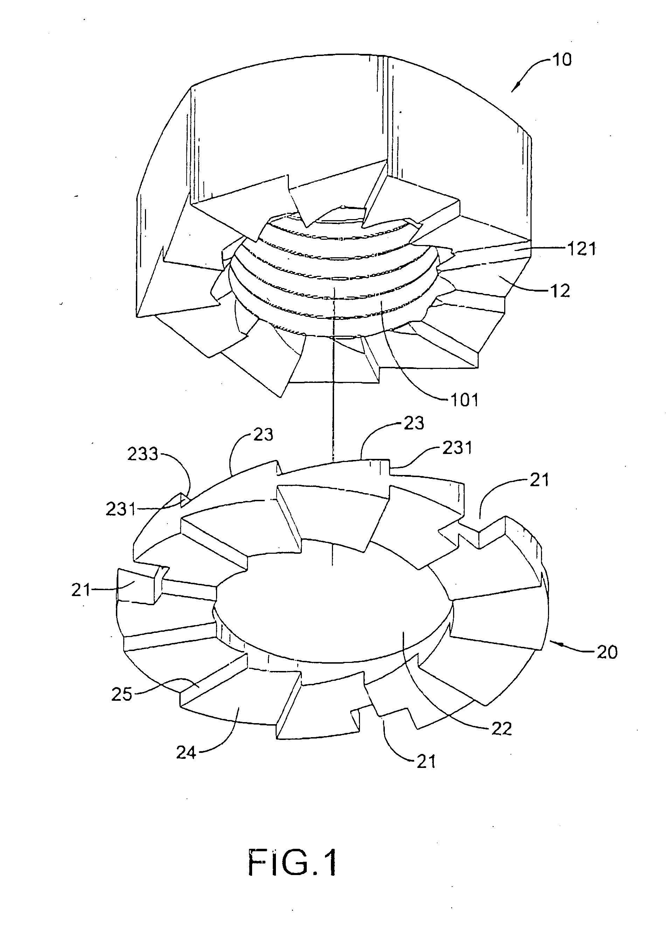

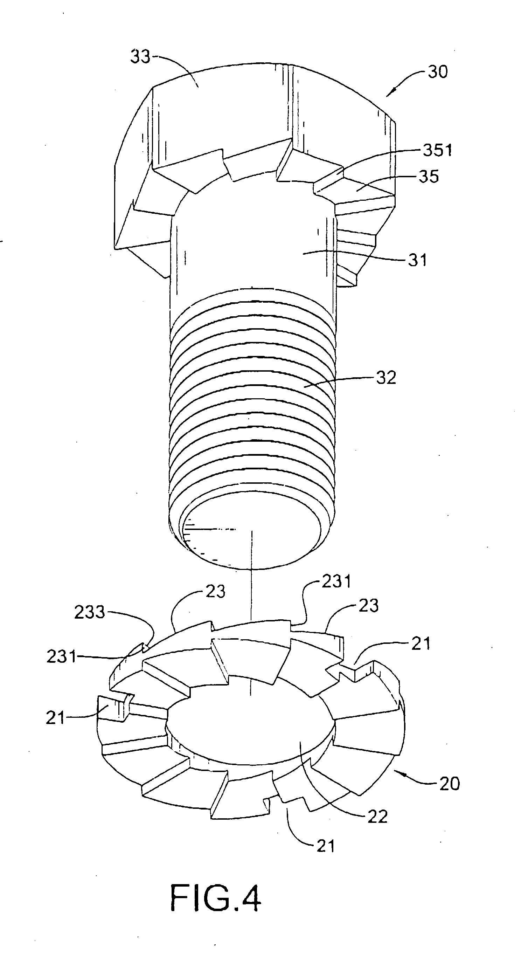

With reference to Fig. 4, a first embodiment of a bolt assembly of the bolt and nut combination in accordance with the present invention is engaged with the nut assembly and has a washer (20) and a bolt (30). The washer (20) has a same structure as the washer (20) shown in Figs. 1 to 3.

The bolt (30) is screwed with the nut (10, 10') and has a shank (31), a thread (32), a head (33), multiple wedging surfaces (35) and an optional flange (34). The shank (31) is extended into the threaded hole (101) in the nut (10, 10') and the through hole (22) in the washer (20) and has a distal end, a proximal end and an outer surface. The distal end of the bolt (30) is extended through the threaded hole (101, 101') of the nut (10, 10') and the through holes (22) of the washers (20).

The thread (32) is formed around the outer surface of the shank (31) and is engaged with the threaded hole of the nut (10, 10'). The head (33) is formed in the proximal end of the shank (31) and has a bottom. The wedging surfaces (35) are formed continuously on the bottom of the head (33) and each wedging surface (35) has two connecting portions and a retaining surface (351).

The retaining surface (351) is formed vertically on one of the connecting portions of the wedging surface (35), is connected to an adjacent wedging surface (35) and contacts with a corresponding bearing surface (231) of the inclined surface (23) in the washer (20). When the bolt (30) is rotated, the retaining surfaces (351) of the wedging surfaces (35) will push against the bearing surfaces (231) of the inclined surfaces (23) to rotate the washer (20) with the bolt (30).

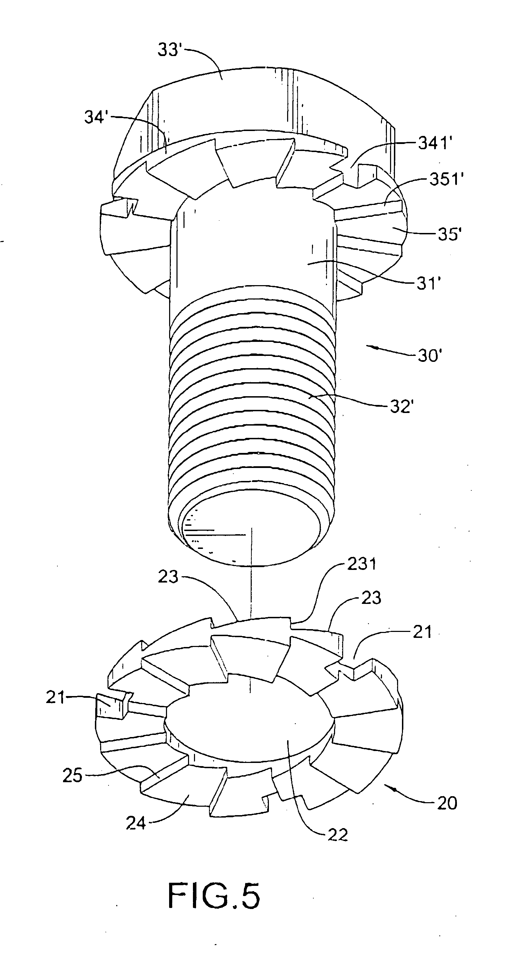

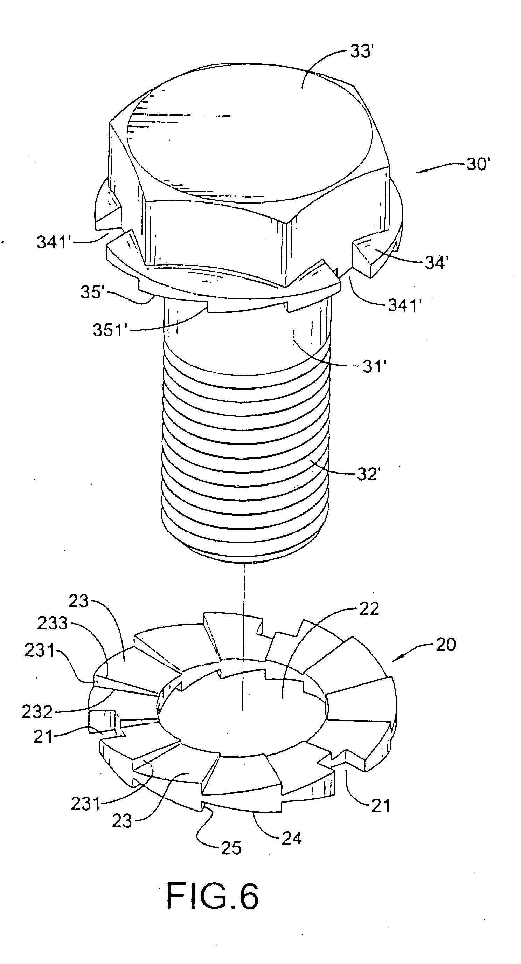

With reference to Figs. 5 and 6, the second embodiment of the bolt (30') has a structure substantially same as the bolt (30) in the first embodiment but further has a flange (34'). The flange (34') is formed around the bottom of the head (33'), is connected to the wedging surfaces (35') and has multiple gaps (341'). The gaps (341') are formed through the flange (34') and the wedging surfaces (35') and correspond to and communicate with the notches (21) in the washer (20). Thus, the bolt assembly can be rotated with a tool engaging with the gaps (341') and the notches (21).

The bolt and nut combination is used to combine two objects (40, 41) together. With reference to Figs. 3, 6 and 7, the bolt (30') of the bolt assembly extends into an object (40) from a top of the object (40) and is screwed with the nut (10') of the nut assembly located on a bottom of another object (41). The washers (20) are respectively contacted with the objects (40, 41) with the engaging surfaces (24). The shank (31') of the bolt (30') is extended through the objects (40, 41) and the washers (20) and is screwed with the threaded hole (101') of the nut (10'). Accordingly, the objects (40, 41) are securely combined with each other by the bolt and nut combination.

The inclined surfaces (23) are respectively contacted with the wedging surfaces (12', 35') of the nut (10') and the bolt (30') at the angle θ due to the inclined edges (233). When the nut (10') or the bolt (30') is rotated to loosen from the objects (40, 41), a returning force will be concentrated on a small contact area between the inclined surfaces (23) and the corresponding wedging surfaces (12', 35'). The returning force concentrated on the small contact area will increase the pressure between the washers (20), the bolt (30') and the nut (10') to push the washers (20) to engage with the objects (41, 40) more securely. Thus, the engagement between the washers (20) and the objects (41, 40) provides a securely positioning effect to the objects (41, 40).

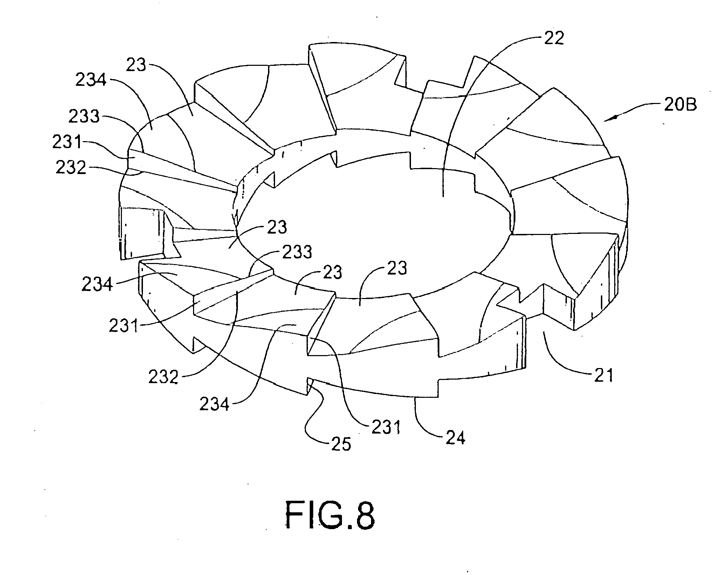

With reference to Fig. 8, the second embodiment of the washer (20B) has a same structure as the washers (20) expect of multiple curved surfaces (234). The curved surfaces (234) are respectively protruded from the inclined surfaces (23) to abut the inclined edge (233) and selectively engage with the wedging surfaces (12, 12', 35, 35') of the nut (10,10') and the bolt (30, 30').

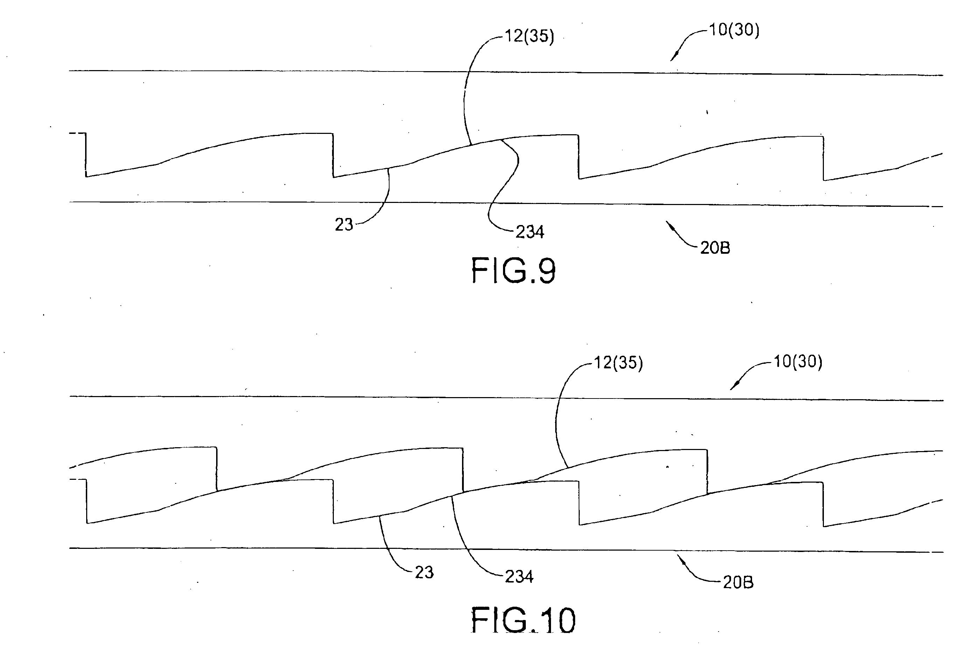

With reference to Figs. 9 and 10, when the bolt (30, 30') or the nut (10, 10') is rotated relative to the washer (20B), the wedging surfaces (12, 12', 35, 35') will contact with the curving surfaces (234) and push the washers (20A) to engage with the objects (40, 41) more securely. Furthermore, the curving surfaces (234) will shorten the displacement distance of the bolt (30, 30') and the nut (10, 10'), to prevent the impact generated by the objects (40, 41) from loosening the bolt (30, 30') and nut (10, 10') engagement. Thus, the two objects (40, 41) can be mounted firmly with respect to each other.

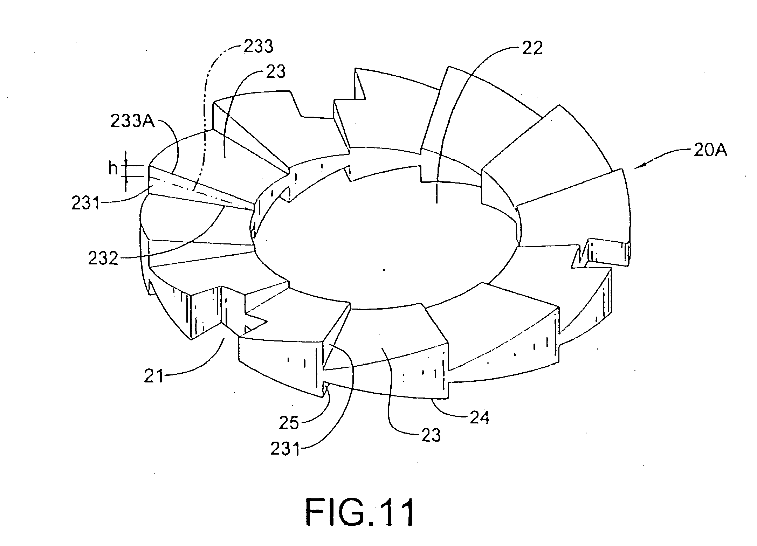

With reference to Fig. 11, the third embodiment of the washer (20A) has a same structure as the washers (20) expect of the inclined edges (233A) each has a height (h) higher than that of the bearing surfaces (231) of the inclined edges (233) in the washers (20). The higher inclined edges (233A) can contact with the wedging surfaces (12, 12', 35, 35') of the nut (10,10) and the bolt (30, 30') early when the bolt (30, 30') or the nut (10, 10') is rotated. The inclined edges (233A) can push the washers (20A) to engage with the objects (40, 41) more securely and shorten the displacement distance of the bolt (30, 30') and the nut (10, 10') to prevent the impact generated by the objects (40, 41) from loosening the bolt (30, 30') and nut (10, 10') engagement.

The bolt and nut combination as described has the following advantages.
1. The wedging surfaces (12, 12', 35, 35') and the retaining surfaces (121,121', 351, 351') of the nut (10, 10') and the bolt (30, 30') engage respectively with the inclined surfaces (23) and the blocking surfaces (25) of the washers (20) to provide an enough returning force to completely rotate the bolt (30,30') or nuts (10,10') return to an original position for firmly engagement with the washers (20).
2. The inclined surfaces (23) of the washers (20) respectively contact with the wedging surfaces (12, 12', 35, 35') of the nut (10, 10') and the bolt (30, 30'). Then, the returning force is concentrated on a small contact area between the inclined surfaces (23) and the corresponding wedging surfaces (12, 12', 35, 35') to increase the pressure between the washers (20), the bolt (30') and the nut (10'). The increased pressure will push the washers (20) to engage with the objects (41, 40) more securely to provide a securely positioning effect to the objects (41, 40).
3. Forming the curving surfaces (234) protruded on the inclined surfaces (23) or increasing the height of the bearing surfaces (231) can shorten the displacement distance of the bolt (30, 30') and the nut (10, 10') to prevent the impact generated by the objects (40, 41) from loosening the bolt (30, 30') and nut (10, 10') engagement.

## Claims

1. A nut assembly of a bolt and nut combination having
a nut (10) having
a center;
a bottom;
a threaded hole (101) being formed through the center of the nut (10); and
multiple wedging surfaces (12) being formed continuously on the bottom of the nut (10) and each wedging surface (12) having
two connecting portions; and
a retaining surface (121) being formed vertically on one of the connecting portions of the wedging surface (12) and being connected to an adjacent wedging surface (12); and
a washer (20) being connected to and engaged with the nut (10) and having
a center;
a top;
a bottom;
a through hole (22) being defined in the center of the washer (20) and being communicated with the threaded hole (101) of the nut (10);
multiple inclined surfaces (23) being formed continuously on the top of the washer (20), being contacted respectively with the wedging surfaces (12) of the nut (10) and each inclined surface (23) having
a rear end;
a bottom edge (232) being defined in the rear end of the inclined surface (23);
a bearing surface (231) being vertically formed up from the inclined surface (23), being contacted with the retaining surface (121) of a corresponding wedging surface (12) and having
a lower end; and
an upper end; and
an inclined edge (233) being defined in the upper end of the bearing surface (231); and
multiple engaging surfaces (24) being formed continuously on the bottom of the washer (20) and each engaging surface (24) having
two connecting portions; and
a blocking surface (25) being formed vertically on one of the connecting portions of the engaging surface (24) and being connected to an adjacent engaging surface (24) to be adapted to abut and contact with an object.

2. The nut assembly as claimed in claim 1, wherein the washer (20B) further has multiple curved surfaces (234) respectively being protruded from the inclined surfaces (23), abutting respectively with the inclined edges (233) and engaged respectively with the wedging surfaces (12, 12') of the nut (10,10').

3. The nut assembly as claimed in claim 1, wherein the nut (10') further has a flange (11') being formed around the bottom of the nut (10') and being connected to the wedging surfaces (12').

4. The nut assembly as claimed in claim 3, wherein the flange (11') has multiple gaps (111') being formed through the flange (11') and the wedging surfaces (12').

5. The nut assembly as claimed in claim 4, wherein the washer (20) further has multiple notches (21) being formed through the washer (20) from the bottom to the top and respectively corresponding to and communicating with the gaps (111') in the flange (11') of the nut (10').

6. A bolt assembly of a bolt and nut combination having
a washer (20) having
a center;
a top;
a bottom;
a through hole (22) being defined in the center of the washer (20);
multiple inclined surfaces (23) being formed continuously on the top of the washer (20) and each inclined surface (23) having
a rear end;
a bottom edge (232) being defined in the rear end of the inclined surface (23);
a bearing surface (231) being vertically formed up from the inclined surface (23) and having
a lower end; and
an upper end; and
an inclined edge (233) being defined in the upper end of the bearing surface (231);
multiple engaging surfaces (24) being formed continuously on the bottom of the washer (20) and each engaging surface (24) having
two connecting portions; and
a blocking surface (25) being formed vertically on one of the connecting portions of the engaging surface (24) and being connected to an adjacent engaging surface (24) to be adapted to abut and contact with an object; and
a bolt (30) being contacted and engaged with the washer (20) and having
a shank (31) extended into the through hole (22) in the washer (20) and having
a distal end extended through the through hole (22) of the washer (20);
a proximal end; and
an outer surface;
a thread (32) being formed around the outer surface of the shank (31) and being adapted to screw with a nut (10, 10');
a head (33) being formed in the proximal end of the shank (31) and having a bottom;
multiple wedging surfaces (35) being formed continuously on the bottom of the head (33) and each wedging surface (35) having
two connecting portions; and
a retaining surface (351) being formed vertically on one of the connecting portions of the wedging surface (35) and being connected to an adjacent wedging surface (35) and being contacted with the bearing surface (231) of a corresponding inclined surface (23) in the washer (20).

7. The bolt assembly as claimed in claim 6, wherein the washer (20.8) further has multiple curved surfaces (234) respectively being protruded from the inclined surfaces (23), abutting respectively with the inclined edges (233) and engaging respectively with the wedging surfaces (35, 35') of the bolt (30, 30').

8. The bolt assembly as claimed in claim 7, wherein the bolt (30') further has a flange (34') being formed around the bottom of the head (33') and being connected to the wedging surfaces (35').

9. The bolt assembly as claimed in claim 8, wherein the flange (34') has multiple gaps (341') being formed through the flange (34') and the wedging surfaces (35').

10. The nut assembly as claimed in claim 9, wherein the washer (20) further has multiple notches (21) being formed through the washer (20) from the bottom to the top and respectively corresponding to and communicating with the gaps(341') in the flange (34') of the bolt (30').

11. A washer (20) of a bolt and nut combination having
a center;
a top;
a bottom;
a through hole (22) being defined in the center of the washer (20);
multiple inclined surfaces (23) being formed continuously on the top of the washer (20) and each inclined surface (23) having
a rear end;
a bottom edge (232) being defined in the rear end of the inclined surface(23);
a bearing surfaces (231) being vertically formed up from the inclined surface (23) and having
a lower end; and
an upper end; and
an inclined edge (233) being defined in the upper end of the bearing surface (231);
multiple engaging surfaces (24) being formed continuously on the bottom of the washer (20) and each engaging surface (24) having
two connecting portions; and
a blocking surface (25) being formed vertically on one of the connecting portions of the engaging surface (24) and being connected to an adjacent engaging surface (24) to be adapted to abut and contact with an object.

12. The washer as claimed in claim 11, wherein the washer (20) further has multiple curved surfaces (234) respectively being protruded from the inclined surfaces (23) and abutting respectively with the inclined edge (233).
